(19) Europäisches Patentamt
European Patent Office
Office européen des brevets

(11) Publication number: **0 248 446 A2**

(12) **EUROPEAN PATENT APPLICATION**

(21) Application number: **87108186.5**

(22) Date of filing: **05.06.87**

(51) Int. Cl.⁴: **C08F 14/26**, C08F 2/18, D01F 6/12, D01F 6/32

(30) Priority: **06.06.86 US 871244**
**30.01.87 US 8913**

(43) Date of publication of application: **09.12.87 Bulletin 87/50**

(84) Designated Contracting States: **DE GB IT**

(71) Applicant: **E.I. DU PONT DE NEMOURS AND COMPANY**
**1007 Market Street**
**Wilmington Delaware 19898(US)**

(72) Inventor: **Folda, Thomas Josef**
**Keltenstrasse 11**
**D-6238 Hofheim(DE)**
Inventor: **Hoffmann, Heinz**
**Waldsteinring 40**
**D-8580 Bayreuth(DE)**
Inventor: **Smith, Paul**
**1621 Chapala Street Apartment D**
**Santa Barbara California 93101(US)**

(74) Representative: **Abitz, Walter, Dr.-Ing. et al**
**Abitz, Morf, Gritschneder, Freiherr von Wittgenstein Postfach 86 01 09**
**D-8000 München 86(DE)**

(54) **Anisotropic, liquid crystalline, polytetrafluoroethylene and tetrafluoroethylene copolymer aqueous dispersions.**

(57) Anisotropic, liquid crystalline, polytetrafluoroethylene (PTFE) and tetrafluoroethylene (TFE) copolymer aqueous dispersions having rod-like particles of PTFE or TFE copolymer, and white PTFE and TFE copolymer fibers prepared directly therefrom.

FIG. 1

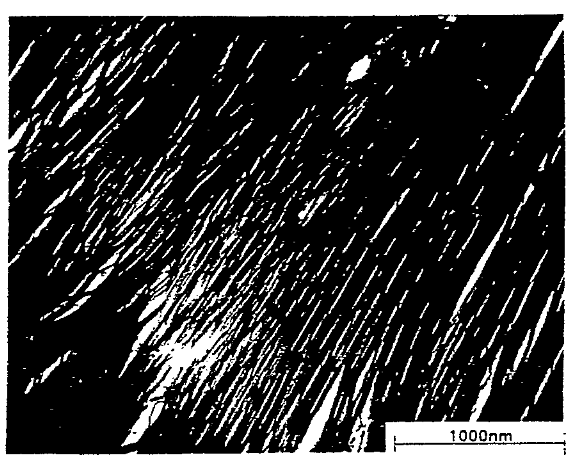


EP 0 248 446 A2

Xerox Copy Centre

# Anisotropic, Liquid Crystalline, Polytetrafluoroethylene and Tetrafluoroethylene Copolymer Aqueous Dispersions

## BACKGROUND OF THE INVENTION

### Field of the Invention

This invention relates to polytetrafluoroethylene (PTFE) and tetrafluoroethylene (TFE) copolymer aqueous dispersions having at least one anisotropic liquid crystalline phase, and to white PTFE and TFE copolymer fibers prepared directly. from such an anisotropic liquid crystalline phase.

### Background

The formation of different particle morphologies, including rods, in tetrafluoroethylene (TFE) dispersion polymerizations is disclosed in the art (see, for example, T. Shimizu et al., Kobunshi Kako, 1981, 30 (10), 473; C.A. 96 (12), 86199p; Japanese Patent Application 47-67565 which was published March 12, 1974 as Kokai 49-27587; Seguchi et al., Journal of Polymer Science, Polymer Physics Edition, Vol. 12, 2567-2576 (1974); and U.S. 2,599,750; 2,559,751; and 2,559,752), but spontaneous formation of a separate anisotropic phase is not. This phase offers the potential of producing white PTFE fibers easier than by means of existing processes, such as disclosed in British Patent Specification 813,332 (and its substantially equivalent U.S. Patent 2,772,444) and which involve the addition of a PTFE dispersion to a viscose solution, spinning in sulfuric acid to regenerate the cellulose, followed by sintering, which results in the formation of black PTFE fibers, the black fibers being converted to white fibers by bleaching, for example, by treating with a strong acid at an elevated temperature.

It is an object of this invention to provide processes for producing anisotropic, liquid crystalline, polytetrafluoroethylene (PTFE) and tetrafluoroethylene (TFE) copolymer aqueous dispersions. Another object is to provide such dispersions which can be converted directly into shaped structures comprised of PTFE or TFE copolymers. A further object is to provide such dispersions which can be converted directly by coagulating procedures into shaped structures comprised of PTFE or TFE copolymers. Another object is to provide processes for such direct conversion into shaped structures. Still another object is to provide the shaped structures, for example, fibers, which have been produced by such processes. These and other objects will become apparent hereinafter.

## BRIEF DESCRIPTION OF THE DRAWINGS

Figures 1 to 4 are transmission electron micrographs of rod-like PTFE particles made by the process of the invention carried out at reaction times of 1, 30, 60 and 180 minutes, respectively.

Figure 5 is an electron diffraction pattern of a rod-like PTFE particle, recorded at room temperature, prepared by the process of the invention.

Figures 6 to 9 depict, respectively, the anisotropic phase which is produced by the process of the invention carried out at reaction times of 5, 30, 60 and 180 minutes, as seen by means of a polarized microscope at 100 magnification.

Figure 10 is an X-ray diffraction pattern of oriented PTFE fiber which is produced by the process of the invention.

Figure 11 is a photograph of the PTFE dispersion prepared by the process of the invention carried out at a reaction time of 60 minutes, observed between crossed polarizers.

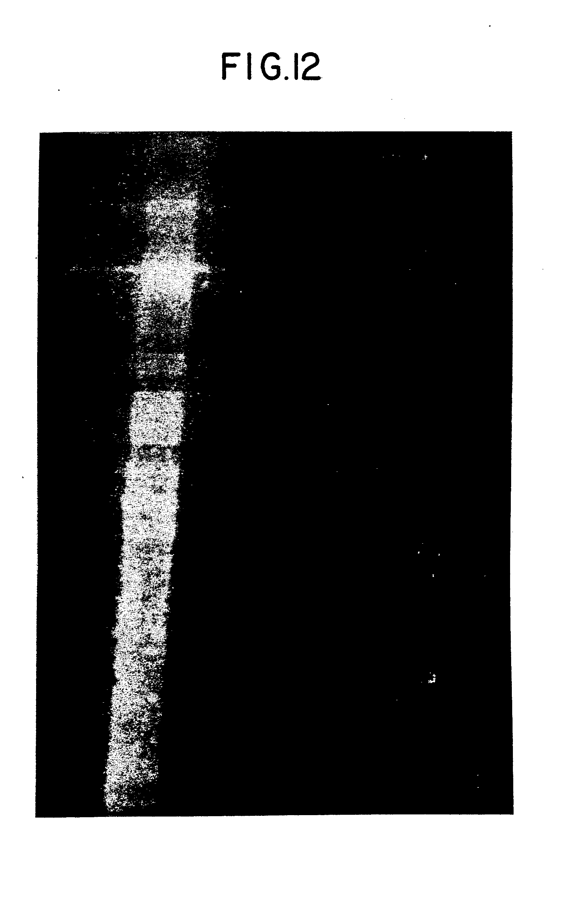

Figure 12 is a polarized micrograph of oriented PTFE fiber which is produced through use of the process of the invention.

DETAILED DESCRIPTION OF THE INVENTION

This invention resides in anisotropic, liquid crystalline, polytetrafluoroethylene (PTFE) and tetrafluoroethylene (TFE) copolymer aqueous dispersions, and to white fibers (of the polymers) which are produced directly therefrom. The anisotropic liquid crystalline dispersion of this invention is formed spontaneously when prepared in accordance with the procedures disclosed in detail hereinafter. The anisotropic liquid crystalline dispersion of the invention may comprise the entire dispersion, or it may comprise a part of the dispersion, prepared in accordance with the procedures disclosed herein. Aqueous dispersions of the latter type comprise an uppermost nonanisotropic (that is, an isotropic) phase, which is not considered a part of this invention, and one or more anisotropic phases, each one of which is considered a part of this invention. Formation of the novel anisotropic phase or phases is dependent on the structure of the surfactant used in the polymerization medium and on its concentration and purity, on the reaction time of the polymerization process and, in the case of TFE copolymers, on the structure of the comonomer which is copolymerized with the TFE. One or more anisotropic phases may be produced by the process of this invention, and the anisotropic phase(s) may comprise from about 5% to 100%, by volume, of the total volume of the dispersion. When the amount of anisotropic phase(s) is less than 100% of the total volume of dispersion, the anisotropic phase(s) separates out as the lower layer(s) within 72 hours, often 4 to 72 hours, after termination of polymerization.

Transmission electron micrographs of the anisotropic liquid crystalline dispersion of this invention show the presence of a high proportion of rod-like PTFE (or TFE copolymer) particles which are aggregated into bundles. Although the formation of dispersions containing rod-like particles of PTFE has been disclosed in the aforesaid art, the presence of rod-like particles, per se, is not the sole criterion for the spontaneous formation of an anisotropic liquid crystalline dispersion. As is known from the work of P. J. Flory, Proceedings of the Royal Society of London, A234, 73 (1956), the formation of a spontaneously-anisotropic phase depends critically on both the concentration of the rod-like particles and their aspect ratios, that is, the ratio of length to diameter. The anisotropic phase can be detected by means of its birefringence, when observed through crossed polarizers. Although all the factors which control the formation of one or more anisotropic phases in the aqueous dispersion polymerization of tetrafluoroethylene (TFE) are not fully understood, the interlocking set of conditions described herein consistently produce dispersions consisting of at least 5% anisotropic liquid crystalline phase. The spontaneous order which is present in anisotropic phases is advantageously used in the direct production of shaped articles of PTFE and TFE copolymers, such as white PTFE and TFE copolymer fibers.

The structure of the surfactant which is present during polymerization and which is requisite herein is represented by the formula RA wherein:

R is

1) $Z \leftarrow CF_2 \rightarrow_x \leftarrow CH_2CH_2 \rightarrow_y$ wherein

y is 0 or 1;

x is 7 to 13; and

Z is H, F, Cl or Br; or

2) $W\text{-}CF_2CF(W)O \leftarrow CF_2CF(CF_3)O \rightarrow_z CF_2CF_2\text{-}$
wherein

z is 1 or 2; and

W is Cl or F; or

3) $Z \leftarrow CF_2 \rightarrow_x \leftarrow CH_2 \rightarrow_y$ wherein

y is 0, 1 or 2;

x is 8 to 13; and

Z is H, F, Cl or Br; and

A is

$-SO_3M$, $-COOM$ or $-SO_3NR_2$ wherein

M is $Li^+$, $Na^+$, $K^+$ or $NH_4^+$;

R is $-C_xH_{2x+1}$; and

x is 1 to 5.

The initial concentration of the surfactant in the aqueous polymerization medium is critical and must at least equal the critical micelle concentration (cmc) of the surfactant. As noted in Example 30 herein, with one of the operable surfactants it has been discovered that the concentration of surfactant must be greater than the cmc. Similar observations have been made with other surfactants falling within the aforesaid formula descriptions, but examples thereof have not been included herein, since one skilled in the art can readily determine the proper and/or optimum surfactant concentration without undue experimentation.

The cmc is dependent on the structure of the surfactant and can be measured by a variety of techniques which are well known in the art. For example, the cmc can be determined by plotting the surface tension of an aqueous solution versus the surfactant concentration. The concentration at which there occurs a distinctive change in slope of the curve may be assigned as the cmc. Typical values of the cmc for surfactants of this invention are shown in Table 1.

Table 1

Critical Micelle Concentration of Selected Fluorinated Surfactants

| Surfactant | CMC (mole/liter) | CMC (wt/vol%) |
|---|---|---|
| $C_6F_{13}COOLi$ | 0.087 | 3.2 |
| $C_7F_{15}COOLi$ | 0.032 | 1.3 |
| $C_8F_{17}COOLi$ | 0.0095 | 0.45 |
| $C_9F_{19}COOLi$ | 0.004 | 0.21 |
| $C_7F_{15}COOLi$ | 0.031 (a) | 1.4 |
| $C_8F_{17}SO_3NEt_4$ | 0.00095 (b) | 0.60 |
| $C_8F_{17}SO_3Li$ | 0.0071 (b) | 0.36 |
| $C_8F_{17}SO_3K$ | >0.0028 (b) | >0.15 |
| $C_8F_{17}COONa$ | 0.0094 (b) | 0.49 |
| $C_8F_{17}COONH_4$ | --- | 0.32 |
| $C_8F_{17}CH_2CH_2SO_3NH_4$ | --- | 0.19 |

Et = ethyl

(a) = E. Oliveras, M-T. Maurette and A. M. Braun, Helv. Chim. Acta, 66, 1183 (1983)

(b) = H. Hoffmann and W. Ulbricht, J. Phys. Chem, 106, 167 (1977).

In general, the amount of anisotropic phase increases as the concentration of surfactant is increased above the cmc to an upper limit which equals the total solubility of the given surfactant the polymerization medium. As noted in Example 30 herein, with one of the operable surfactants it has been discovered that the amount of anisotropic phase reaches a peak and then falls off as the concentration of surfactant is further increased. In any event, since the fluorinated surfactants used in the process of the invention may be considered somewhat expensive, use of very high concentrations of surfactant may be economically disadvantageous. In practice, the amount of surfactant used generally will be determined from a consideration of the cost of the amount of surfactant used and the amount of anisotropic dispersion produced therewith. The optimum concentration can be selected by those skilled in the art to achieve the desired result so long as the initial surfactant concentration is at least equal to the cmc. The preferred concentration range is from about the cmc to about 5 wt./vol.%. Wt./vol.% is defined as the weight of surfactant times 100 divided by the volume of solution; for example, a 1 wt./vol.% solution contains 1 gram of surfactant in 100 cc of solution.

Surfactant purity is important for achieving stable, anisotropic liquid crystalline dispersions. In general, the purity of the surfactant should be greater than 95%, preferably greater than 99%. The presence of excessive impurities will, of course, reduce the amount of the active surfactant whose structure is essential to the invention. Moreover, in certain cases, the impurity may adversely affect the polymerization.

The polymerization time also is important for producing the optimum amount of the anisotropic liquid crystalline phase or phases. The best results are achieved at short polymerization times, of the order of about 1 minute to about 120 minutes, and the amount and degree of organization of the anisotropic liquid crystalline phase(s) may decrease as the polymerization time increases. The optimum polymerization time can be determined for a given set of conditions by removing aliquots of the polymerization reaction mixture at given time intervals and measuring the amount of anisotropic liquid crystalline phase present in the mixture.

As is apparent from the above description, the spontaneous formation of the anisotropic liquid crystalline dispersion of the invention is critically dependent on a set of interlocking conditions which can be varied within the above limitations by those skilled in the art to achieve the desired result.

The dispersion polymerization process of this invention is carried out at a pressure of 20-2000 psig (138-13,800 kPa) of TFE, with 60-600 psig (414-4140 kPa) being the preferred range. In general, the use of higher pressures favors the formation of higher molecular weight polymer.

The temperature employed in the polymerization is 40-150°C, with 60-100°C being the preferred range.

Operable initiators used in the dispersion polymerization process of this invention include those commonly employed for TFE polymerization and TFE copolymerization, for example, free radical initiators, such as disuccinic acid peroxide, and the persulfates, for example, ammonium, potassium or sodium persulfate. Initiator concentrations can be from 0.0001 to 0.1 wt./vol.%. The preferred range is 0.005 to 0.020 wt./vol.%.

The polymerization medium is water, and the polymerization can be carried out in either a batch or a continuous mode.

Oxygen is known to inhibit the polymerization and should be substantially excluded prior to the start of and during the polymerization.

The preferred polymer of the present invention is the homopolymer of TFE, that is, PTFE. It is to be understood, however, that anisotropic dispersions of the invention may be comprised of copolymers of TFE and any comonomer which is copolymerizable therewith. Examples of such comonomers include hexafluoropropylene, vinylidene fluoride, perfluoropropyl vinyl ether and perfluorobutyl ethylene. Such copolymers are comprised of a major fraction, that is, greater than 50 mol %, preferably greater than 80 mol %, of repeat units of TFE and a minor fraction, that is, less than 50 mol %, preferably less than 20 mol %, of repeat units of the comonomer which is copolymerizable with the TFE. Examples 31-34 represent embodiments of anisotropic dispersions of the invention comprised of TFE copolymers. It is to be understood that, with certain comonomers which are copolymerizable with TFE, the concentration of the comonomer polymer repeat units may have to be limited to less than the aforesaid amounts, perhaps to as little as 2 mol % or less (for example, about 1 mol %), in which case the concentration of TFE polymer repeat units would be 98 mol % or more (for example, about 99 mol %). One skilled in the art can readily ascertain without undue experimentation the maximum amount of comonomer which can be copolymerized with the TFE in order to obtain the anisotropic, liquid crystalline aqueous dispersion of the invention. Preferred copolymers herein include TFE/vinylidene fluoride copolymers comprised of less than 20 mol % of vinylidene fluoride repeat units and TFE copolymers comprised of no more than 2 mol % of comonomer repeat units of hexafluoropropylene, perfluoropropyl vinyl ether or perfluorobutyl ethylene.

During the polymerization, rod-like particles of polymer are formed. These aggregate into bundles to create the anisotropic liquid crystalline dispersion of the invention. A transmission electron micrograph (Figure 1) of an anisotropic, liquid crystalline PTFE phase of the invention shows the presence of long rods and a high degree of order. The length of the rods decreases with longer reaction times, as does the degree of organization of the rod-like PTFE particles, as shown in Figures 2, 3 and 4. Figures 1 to 4 depict the electron micrographs for the rod-like particles produced in Examples 1, 3, 4 and 5, respectively, wherein the respective reaction times are 1, 30, 60 and 180 minutes.

The electron diffraction pattern of a single rod-like PTFE particle shows that the polymer chains are aligned in the same direction as the rod; this is depicted in Figure 5. Consistent with the decreasing length of the rods at longer reaction times, the size of the domains of the anisotropic liquid crystalline phases also decreases as shown in Figures 6 to 9 which depict the phases produced by the process of the invention carried out at reaction times of 5, 30, 60 and 180 minutes (Examples 2 to 5) as seen by means of a polarized microscope at 100 magnification.

Examples 1-17 herein are representative of embodiments of the invention wherein multi-phase dispersions are produced. The upper phase of such dispersions also contains rod-like particles. However, in contrast to the anisotropic liquid crystalline lower phase, the rod-like particles in the upper phase are isotropically distributed. They can be aligned in a magnetic field, however, then showing a very strong

birefringence. The relaxation time after removal of the magnetic field has been observed to be approximately ten minutes. When made by the process of this invention the upper phase comprises greater than 0% to less than 100%, and the lower phase(s) comprises less than 100% to greater than 0%, of the total volume of the dispersion.

In another embodiment of the invention, the preparation of a single-phase, anisotropic liquid crystalline dispersion is demonstrated in Examples 18-24. Examination of the dispersion between crossed polarizers shows it to be birefringent, as demonstrated in Figure 11 which represents the product of Example 18. The electron diffraction pattern of a single rod-like PTFE particle shows that the polymer chains are aligned in the same direction as the rod. This also can be seen by high resolution transmission electron microscopy.

White PTFE or TFE copolymer fibers can be spun easily by adding the anisotropic liquid crystalline dispersion to a coagulant, such as a dilute aqueous solution of calcium or magnesium chloride, 1-98% $H_2SO_4$/water, 1-30% HCl/water, ethanol for a dispersion prepared in the presence of a surfactant containing a terminal $-SO_3^-$group, or dilute, for example, 2 wt. %, aqueous solutions of $C_{16}H_{33}N(CH_3)_3^+BR^-$ for a dispersion prepared in the presence of a surfactant containing a terminal $-COO^-$ group. The concentration of calcium chloride or magnesium chloride solution used for spinning fibers can be 2-10 wt.%, preferably about 5 wt.%. The resulting fibers show a very strong optical birefringence, indicating that oriented fibers are produced. This may also be seen from X-ray measurements of the fiber, as depicted, for example, in Figure 10.

As is apparent from the above disclosure, the anisotropic liquid crystalline dispersion produced in accordance with the invention herein provides an alternate means for the preparation of white PTFE and TFE copolymer fibers, that is, alternate to conventional methods which require sintering procedures, the intermediate formation of black PTFE fibers and bleaching. Such conventionally-produced fibers are available commercially.

The properties of the fibers produced by means of the invention herein depend on a variety of factors, including but not necessarily limited to the molecular weight of the polymer, the coagulant used, the spinning speed (into the coagulant) and the thermal treatment given the fibers. In general, most of the desirable fiber properties are enhanced by increased polymer molecular weight and by heat treating the fibers. When salt solutions are used as the coagulant, fiber properties may be diminished if the salt is not thoroughly washed out of the fiber. Shown in Table 2 are physical properties of commercially available natural (black) and bleached (white) PTFE fibers. Included in the table for comparison are property data which are typical of the white oriented fibers which can be provided by means of the invention herein. The data shown in the table were obtained on fiber produced from an anisotropic liquid crystalline dispersion which was prepared by the process of the invention employing surfactant (3) hereinabove, that is, an embodiment which provides a single phase, anisotropic liquid crystalline dispersion. The properties of the fibers produced from such liquid crystalline dispersions and the properties of the fibers produced from the anisotropic liquid crystalline phase(s) of multi-phase dispersions are substantially the same. In the table, tenacity (T) and modulus (M) are given in g/denier and elongation (E) is given in %. Tenacity and modulus have been calculated using denier at break. Heat treatment was at 370°C for about 60 seconds, stretching was at 370°C so as to maintain the original length during the heat treatment. Further regarding the data in Table 2 and the procedures used to obtain the data, since denier is defined as grams of fiber/9000 meters of fiber, as the fiber is stretched, the denier is reduced. Since tenacity and modulus increase as denier is decreased, the invention fibers would exhibit higher tenacity and modulus at a denier of 7.

Table 2

| | T | M | E | Denier |
|---|---|---|---|---|
| Commercially Available | | | | |
| Natural | 2.1 | 13 | 20 | 7 |
| Bleached | 0.9 | <1 | 150 | 7 |
| Invention | | | | |
| As-spun | 0.01 | 0.2 | 50 | 150 |
| Heat treated | 0.6* | 0.1 | 650 | 500 |
| Heat treated** | 0.8 | 5 | 35 | 80 |

* true stress, i.e., actual stress before breakage
** maintaining constant length

It has been further discovered herein that white PTFE and TFE copolymer fibers can be prepared from aqueous dispersions comprised of a mixture of an anisotropic, liquid crystalline aqueous dispersion of rod-like particles of PTFE or TFE copolymer (a dispersion of the invention) and commercially available aqueous PTFE dispersions substantially comprised of spherical particles of PTFE. Depending on the properties desired in the fibers, the mixture may be comprised of up to 95% by weight, based on the combined weights of polymers, of the commercially available aqueous dispersion. This feature of the invention is demonstrated in Examples 44 and 45.

Although the direct conversion of the anisotropic, liquid crystalline aqueous dispersion into fibers is described in detail hereinabove, there is no intention to limit the dispersions to such use, nor to the methods described to effect the direct conversion. One skilled in the art will readily envision other shaped structures which can be produced from such dispersions and, moreoever, will envision methods other than the coagulating procedure described hereinabove to effect the direct conversion.

The invention is further illustrated but not limited by the following examples. All temperatures are in degrees Celsius.

Examples 1-5

Preparation of Anisotropic PTFE Dispersions Via Phase Separation of PTFE Dispersions Using $C_9F_{19}COONH_4$ as Surfactant

A 400 mL glass reaction vessel equipped with a mechanical stirrer was charged with 2 g of ammonium perfluorodecanoate ($C_9F_{19}COONH_4$), 200 mL of water and 10 mg of $K_2S_2O_8$ initiator. The vessel was evacuated with an oil vacuum pump, nitrogen was admitted into the reactor, and the solution was stirred for approximately five minutes. The degassing step was repeated a total of three times. While the reactor was flooded with nitrogen, between consecutive degassings, a small amount of TFE was bled into the reactor to clear the TFE lines (not part of the degassing procedure) of air. After the final evacuation the stirring rate was increased to 1000 rpm and the vessel was pressurized to 50 psig (345 kPa) with TFE. The TFE supply was shut off and the reaction vessel was placed into a water bath (84°). The temperature of the contents began to rise, and the internal pressure increased. When polymerization commenced (indicated by a decrease in the internal pressure), the TFE supply was opened and a constant pressure of 60 psig (414 kPa) was maintained. When the inside temperature reached 77°, a timer was activated. The polymerization was continued for a specified time, as shown in Table 3.

On standing for approximately four hours at room temperature after polymerization the dispersions exhibited phase separation. Observation of both phases between crossed polarizers showed that the upper phase (90-95% of the volume) was not birefringent (that is, it was isotropic) on standing but became birefringent when the dispersion was stirred, the stirring causing alignment of the particles. This alignment

(orientation) can also be effected by means of a magnetic field, as discussed above. The lower phase (5-10% of the volume) was birefringent when the dispersion was stationary, as well as when it was being stirred. Data are shown in Table 3. The last two columns show the concentration 25 of polymer, in wt.%, in the total dispersion ($C_T$) and in the lower (anisotropic) phase ($C_L$), respectively.

Table 3

| Ex. No. | Reaction Time (minutes) | Polymer $C_T$ | Polymer $C_L$ |
|---|---|---|---|
| 1 | 1 | 1.65 | 3.30 |
| 2 | 5 | 2.70 | 6.00 |
| 3 | 30 | 6.41 | 10.50 |
| 4 | 60 | 9.10 | -- |
| 5 | 180 | 13.20 | -- |

The molecular weight ($\bar{M}_w$) of the PTFE for each of the five examples was 25,000, as determined by the differential scanning calorimetry (DSC) technique described by T. Sawa, M. Takekisa and S. Mechi in J. Applied Polymer Science, 17 , 3252 (1973). Polymer with higher molecular weight can be made by increasing the pressure of TFE and reducing the initiator concentration.

Examples 6-10

Preparation of Anisotropic PTFE Dispersions Via Phase Separation of PTFE Dispersions Using Various Surfactants

Examples 1-5 were repeated, using various surfactants and surfactant concentrations, as shown in Table 4. In each case, phase separation was observed, with the production of an anisotropic phase. The results are shown in Table 4, including the concentration of polymer, in wt.%, in the total dispersion.

Table 4

| Ex. No | Surfactant | Wt./Vol.% Surfactant | Reaction Time (minutes) | Polymer $C_T$ |
|---|---|---|---|---|
| 6 | $C_8F_{17}SO_3N[C_2H_5]_4$ | 1 | 1 | 1.1% |
| 7 | $C_8F_{17}SO_3N[C_2H_5]_4$ | 1 | 30 | 1.6% |
| 8 | $C_8F_{17}COOK$ | 1 | 30 | 7.9% |
| 9 | $C_8F_{17}COONH_4$ | 2 | 10 | 1.6% |
| 10 | $C_9F_{19}COONH_4$ | 3 | 40 | 12.2% |

Example 11

Preparation of Anisotropic PTFE Dispersion Via Phase Separation of PTFE Dispersion Using $F(CF_2CF_2)_nCH_2CH_2SO_3K$ as Surfactant

The procedure of Examples 1-5 was repeated using 4 g of $F(CF_2CF_2)_nCH_2CH_2SO_3K$ in place of $C_9F_{19}COONH_4$ as the surfactant. The composition of the surfactant mixture used in this experiment was as follows, in weight %:

n = 2 : 2%
n = 3 : 36%
n = 4 : 32%
n = 5 : 19%
n = 6 : 11%

The polymerization time was 30 minutes. On standing for approximately 12 h at room temperature after polymerization the dispersion exhibited phase separation. The lower (anisotropic) phase constituted approximately 7% of the total volume.

Fibers were successfully prepared from the anisotropic phase by adding it, via syringe, to 5% $CaCl_2$ and 5% $MgCl_2$ aqueous solutions.

Example 12

Preparation of Anisotropic PTFE Dispersion via Phase Separation of PTFE Dispersion Using $C_9F_{19}COONa$ as Surfactant

Example 11 was repeated using 2 g of $C_9F_{19}COONa$ as the surfactant. On standing overnight (about 14 h) at room temperature after polymerization the dispersion exhibited phase separation. The lower (anisotropic) phase constituted approximately 5% of the total volume.

Fibers were successfully prepared from the anisotropic phase by adding it, via syringe, to 5% $CaCl_2$ and 5% $MgCl_2$ aqueous solutions.

Example 13

Preparation of Anisotropic PTFE Dispersion Via Phase Separation of PTFE Dispersion Using $C_9F_{19}COOK$ as Surfactant

Example 11 was repeated using 2 g of $C_9F_{19}COOK$ as the surfactant and 1 mg of $K_2S_2O_8$ as initiator. After polymerization the total phase was birefringent for about 4 hours; after 12 hours, phase separation occurred. The lower (anisotropic) phase constituted of approximately 80% of the total volume. The upper phase was not birefringent.

Fiber spinning was possible, as described herein, using the lower phase.

When shaken briefly the total phase was birefringent and fibers could be made from the total phase. After standing for 72 hours at room temperature the volume of the lower (anisotropic) phase was 20% of the total volume.

Example 14

Example 13 was repeated using 2 g of $H(CF_2)_{10}COONH_4$ as the surfactant. On standing overnight (about 14 h) at room temperature after polymerization the dispersion exhibited phase separation. The lower (anisotropic) phase constituted approximately 15% of the total volume.

Example 15

Preparation of Anisotropic PTFE Dispersion Via Phase Separation of PTFE Dispersion using $C_2F_5O(CF_2CF(CF_3)O)_2CF_2CF_2COONa$ as Surfactant

The procedure of Examples 1-5 was repeated using 2 g of $C_2F_5O(CF_2CF(CF_3)O)_2CF_2CF_2COONa$ as the surfactant and 1 mg of $K_2S_2O_8$ as initiator. The polymerization time was 60 minutes. After polymerization the total phase was anisotropic. On standing overnight the dispersion exhibited phase separation. The lower (anisotropic) phase constituted approximately 15% of the total volume.

Example 16

Preparation of Anisotropic PTFE Dispersion Via Phase Separation of PTFE Dispersion Using $ClCF_2C(Cl)(F)OCF_2CF(CF_3)OCF_2CF_2COONa$ as Surfactant

The procedure of Examples 1-5 was repeated using 2 g of $ClCF_2C(Cl)(F)OCF_2CF(CF_3)OCF_2CF_2COONa$ as the surfactant. The polymerization time was 25 minutes. On standing overnight the dispersion exhibited phase separation. The lower (anisotropic) phase constituted approximately 80% of the total volume.

Example 17

Preparation of Anisotropic PTFE Dispersion Via Phase Separation of PTFE Dispersion Using $C_7F_{15}COONH_4$ as Surfactant

The procedure of Examples 1-5 was repeated using 6 g (3%) of $C_7F_{15}COONH_4$ as the surfactant and 1 mg of $K_2S_2O_8$ as the initiator. The polymerization time was 60 minutes. On standing overnight (about 12 hours) the PTFE dispersion exhibited phase separation. The lower (anisotropic) phase constituted 25% of the total volume.

The above experiment was repeated using only 3 g (1.5%) of $C_7F_{15}COONH_4$. On standing overnight there was no phase separation and the dispersion showed only shear-induced birefringence. Fibers could not be spun from the dispersion (by extrusion into HCl/water).

Examples 18-20

Preparation of Anisotropic PTFE Dispersions Using $C_8F_{17}SO_3K$ as Surfactant

A 400 mL glass reactor equipped with a mechanical stirrer was charged with 2 g of $C_8F_{17}SO_3K$ (1 wt./vol. %), 200 mL of water and 10 mg of $K_2S_2O_8$ initiator. The vessel was evacuated with an oil vacuum pump, nitrogen was admitted into the reactor, and the solution was stirred for approximately five minutes. The degassing step was repeated a total of three times. While the reactor was flooded with nitrogen, between consecutive degassings, a small amount of TFE was bled into the reactor to clear the lines of air. After the final evacuation the stirring rate was increased to 1000 rpm and the vessel was pressurized to 50 psig (345 kPa) with TFE. The TFE supply was shut off and the reaction vessel was placed into a water bath (84°). The temperature of the contents began to rise, and the internal pressure increased. When polymerization commenced (indicated by a decrease in the internal pressure), the TFE supply was opened and a constant pressure of 60 psig (414 kPa) was maintained. When the inside temperature reached 77°, a timer was activated. The polymerization was continued for a specified time, as shown in Table 5. The last column in the table shows the concentration of polymer in wt. %, in the dispersion.

After polymerization the entire dispersion showed anisotropic behavior. Analysis of the dispersion between crossed polarizers showed it to be birefringent. This is demonstrated in Figure 11 for the polymer of Example 19.

Table 5

| Ex. No. | Reaction Time (minutes) | Polymer Concn. (%) |
|---|---|---|
| 18 | 30 | 2.03 |
| 19 | 60 | 3.60 |
| 20 | 120 | 6.50 |

Example 18 was repeated except that the concentration of surfactant was 1 g (0.5 wt./vol. %) The dispersion which resulted was isotropic, indicating that the amount of surfactant was insufficient.

Examples 21-24

Preparation of Anisotropic PTFE Dispersions Using $C_8F_{17}CH_2CH_2COOK$ as Surfactant

Examples 18-20 were repeated, using $C_8F_{17}CH_2CH_2COOK$ as surfactant at 1 and 3 wt./vol.%. Table 6 summarizes the results, with the last column showing the concentration of polymer in wt. %, in the dispersion.

Table 6

| Ex. No. | Surfactant (wt./vol. %) | Reaction Time (minutes) | Polymer Concn. (%) |
|---|---|---|---|
| 21 | 1 | 15 | 1.61 |
| 22 | 1 | 30 | 2.80 |
| 23 | 1 | 60 | 3.10 |

After polymerization the entire dispersion showed anisotropic behavior. Analysis of the dispersion between crossed polarizers showed it to be birefringent.

Example 25

Preparation of Anisotropic PTFE Dispersion Using $C_8F_{17}CH_2CH_2COONa$ as Surfactant

Examples 18-20 were repeated, using $C_8F_{17}CH_2CH_2COONa$ as surfactant at a concentration of 1 wt./vol.%, and 1 mg of $K_2S_2O_8$ initiator. The concentration of polymer in the dispersion was 2.31%. No phase separation occurred and the dispersion was anisotropic.

Example 26

Preparation of Anisotropic PTFE Dispersion Using $C_8$-$F_{17}CH_2CH_2COONH_4$ as Surfactant

Example 25 was repeated using $C_8F_{17}CH_2CH_2COONH_4$ as surfactant. The concentration of polymer in the dispersion was 5.02%. After 72 hours no phase separation occurred. The dispersion was anisotropic.

Example 27

Preparation of Anisotropic PTFE Dispersion Using $C_8F_{17}CH_2CH_2COOLi$ as surfactant

Example 25 was repeated using $C_8F_{17}CH_2CH_2COOLi$ as surfactant. The concentration of polymer in the dispersion was 2.6%. The dispersion was anisotropic.

Example 28

Preparation of Anisotropic PTFE Dispersion Using $C_8F_{17}CH_2CH_2COOLi$ as Surfactant

Example 27 was repeated using 10 mg of $K_2S_2O_8$ initiator. The concentration of polymer in the dispersion was 4.35%. The dispersion was anisotropic.

Example 29

Example 24 was repeated except that the surfactant concentration was 2%, the reaction time was 90 minutes and the amount of $K_2S_2O_8$ was 1 mg. After polymerization the entire dispersion showed anisotropic behavior and was birefringent. The concentration of PTFE in the dispersion was about 6.6%; the yield of polymer was about 13.1 g, molecular weight $1.71 \times 10^5$.

Example 30

Polymerization of TFE with Different Surfactant Concentrations

This example demonstrates the variation of the amount of anisotropic phase produced (in a two-phase dispersion) when the amount of surfactant present during the polymerization is varied.

Polymerization conditions: Polymerization of TFE at 60 psi and 80°; 200 mL of water; 10 mg of $Na_2S_2O_8$ initiator; reaction time of 40-50 minutes. The results are shown in Table 7, the third column of which shows the ratio of concentration of surfactant to the cmc for that surfactant.

Table 7

| Surfactant | Moles/liter | Conc/CMC | Vol % Aniso-tropic Phase |
|---|---|---|---|
| $C_6F_{13}COOLi$ | 0.057 | 0.66 | 0 |
| | 0.096 | 1.1 | 4.5 |
| | 0.14 | 1.6 | 27.6 |
| | 0.2 | 2.3 | 14.6 |
| $C_7F_{15}COOLi$ | 0.017 | 0.52 | 0 |
| | 0.033 | 1.05 | <1 |
| | 0.065 | 2.10 | 16.6 |
| $C_8F_{17}COOLi$ | 0.0096 | 1.0 | 0 |
| | 0.02 | 2.1 | 4 |
| | 0.04 | 4.1 | .15.4 |
| | 0.059 | 6.2 | 36.9 |

It may be noted in Table 7 that with three different lithium perfluoroalkanoate surfactants, polymerizations with initial surfactant concentrations below the cmc do not give anisotropic phases, whereas polymerizations conducted above the cmc consistently give anisotropic phases. It also may be noted that the use of $C_8F_{17}COOLi$ at the cmc does not give an anisotropic phase. In addition, the amount of anisotropic phase tends to increase as the surfactant concentration is increased above the cmc, except that with $C_6F_{13}COOLi$ at a concentration of 0.2 mole/liter, there is produced less of the anisotropic phase than at a concentration of 0.14 mole/liter.

Example 31

A small, stainless steel, polymerization reactor, equipped with a heater, stirrer and gas inlet tube, was purged with nitrogen to remove all traces of oxygen. The reactor was charged with 200 g of water, 4 g of $C_9F_{19}COONH_4$ (2%), 10 mg of $K_2S_2O_8$ and 1.5 g of perfluoropropyl vinyl ether. The contents was heated to 48° and the pressure was increased to 6963 KPa with the addition of tetrafluoroethylene. The stirrer was set at 1000 rpm, the contents was heated at 80° for 15 minutes, and then allowed to cool to room temperature.

The entire emulsion, containing 21.33% PTFE, was anisotropic. Examination of the emulsion by electron microscopy showed the presence of approximately equal amounts of rods and spheres. The infrared spectra of the polymer showed the presence of 1% perfluoropropyl vinyl ether polymer repeat units in the copolymer.

Fibers were made directly from the anisotropic emulsion by extruding into 5% aqueous calcium chloride solution or 3% aqueous hydrochloric acid. The fibers were highly birefringent.

Example 32

A small, stainless steel, polymerization reactor, equipped with a heater, stirrer and gas inlet tube, was purged with nitrogen to remove all traces of oxygen. The reactor was charged with 200 g of water, 2 g of $C_8F_{17}CH_2CH_2COONH_4$ (1%), 1 mg of $K_2S_2O_8$ and 5 g of perfluoropropyl vinyl ether. The contents was heated to 55° and the pressure was increased to 6915 KPa with the addition of tetrafluoroethylene. The stirrer was set at 1000 rpm, the contents was heated at 80° for 60 minutes, and then allowed to cool to room temperature. The solution exhibited phase separation. The lower anisotropic phase (approximately 80% of the total solution) was birefringent. The upper isotropic phase exhibited only shear induced birefringence.

Examination of the resultant copolymer of the two comonomers by electron microscopy showed the rods to be 0.5 to 2 microns in length. The copolymer also contained some sperical particles.

Example 33

A small, stainless steel, polymerization reactor, equipped with a heater, stirrer and gas inlet tube, was purged with nitrogen to remove all traces of oxygen. The reactor was charged with 200 g of water, 4 g of $C_9F_{19}COONH_4$ (2%), 10 mg of $K_2S_2O_8$ and 0.5 g of perfluorobutyl ethylene. The contents was heated to 60° and the pressure was increased to 6915 KPa with the addition of tetrafluoroethylene. The stirrer was set at 1000 rpm, the contents was heated at 80° for 30 minutes, and then allowed to cool to room temperature.

The entire emulsion was anisotropic. The yield of copolymer was 25.1 g. The copolymer contained 2% of perfluorobutyl ethylene polymer repeat units.

Fiber spinning (into a coagulant as described elsewhere herein) was possible with the entire emulsion. Properties of the fibers so produced are given below.

| Fiber | Denier | Modulus g/den | Tenacity g/den | Elongation (%) |
|---|---|---|---|---|
| Sintered* | 2190 | 1.0 | 0.08 | 492 |
| Sintered* | 500 | 2.3 | 0.54 | 43 |

*at 370° while maintaining at constant length

Example 34

A 400 mL glass reaction vessel equipped with a mechanical stirrer was charged with 2 g of $C_9F_{19}COONH_4$, 200 mL of water and 1 mg of $K_2S_2O_8$. The vessel was evacuated with an oil vacuum pump, nitrogen was admitted into the reactor and the solution was stirred for approximately five minutes. The degassing step was repeated three times. While the reactor was flooded with nitrogen, between consecutive degassings, a small amount of TFE was bled into the reactor to clear the lines of air. After the final evacuation the stirring rate was increased to 1000 rpm and the vessel was pressurized to 345 KPa with a gas mixture consisting of 5% vinylidene fluoride and 95% tetrafluoroethylene. The gas supply was shut off and the reaction vessel was placed into a water bath at 84°. The temperature of the contents began to rise and the internal pressure increased. When polymerization started (indicated by a decrease in the internal pressure), the gas supply of mixed comonomers was opened and a constant pressure of 414 KPa was maintained. The contents was then heated at 80° for 60 minutes, and then allowed to cool to room temperature. The solution upon standing overnight exhibited phase separation. The lower anisotropic phase (45%) was birefringent. The yield of copolymer was 9.4 g. Examination of the copolymer by infrared spectroscopy indicated the presence of 11.6% of vinylidene fluoride polymer repeat units. Fiber spinning was easily possible from the lower phase by extruding into 3% HCl.

Examples 35-37.

Preparation of Fibers from the Anisotropic Phases of Examples 1-3

The anisotropic phases of Examples 1-3 were used to make PTFE fibers by adding each of these phases, via syringe, to 5% $CaCl_2$ and 5% $MgCl_2$ aqueous solutions. The resultant fibers can be suitably washed to removed the salt. In each case, the resultant fibers showed a very strong optical birefringence, indicating that oriented fibers were obtained.

The fibers produced from the anisotropic phase in Example 2 exhibited the following properties: modulus (M), 0.01 g/den; tenacity (T), 0.001 g/den; elongation at break (E), 19%.

Examples 38-42

Preparation of Fibers from the Anisotropic Phases of Examples 6-10

Oriented PTFE fibers were made as in Examples 35-37 except that the anisotropic phases from Examples 6-10 were added via syringe to a 5% $CaCl_2$ aqueous solution.

Example 43

Production of Fibers from the Anisotropic PTFE Dispersions of Examples 18-24

Oriented PTFE fibers were readily obtained from the anisotropic PTFE dispersions in the following way. The dispersion was introduced into piston driven laboratory spinning equipment and forced through a nozzle (diameter 0.5 mm) into a coagulation bath. Both wet-spinning (introducing the flowing dispersion below the bath surface) and dry-jet wet-spinning (also referred to as "air-gap spinning") techniques were successfully employed, although the latter was preferred. Typically, the air-gap was in the range 1-5 mm. The fibers were coagulated in a bath (100 cm in length) containing 5 wt. % $CaCl_2$ in water (Examples 23 and 24); 1-98% sulfuric acid/water (Examples 21-24); 1-30% HCl/water (Examples 4-7); and ethanol (Examples 18-20). The wind-up speeds were typically 20 m/minute, without spin-stretch. A coherent fiber was obtained without further treatment.

Mechanical properties of as-spun fibers produced from the dispersion of Example 24 were measured at room temperature, employing an Instron tensile tester. The initial sample length was 10 mm, the crosshead speed was 1.27 mm/minute. Modulus (M), 1.3 g/den; tenacity (T), 0.02 g/den; and elongation at break (E), 2%. Optical microscopy (Figure 2) and X-ray diffraction revealed a good orientation of the PTFE molecules in the fiber direction. Some of the as-spun fibers were subsequently heated at 370° for one minute. The mechanical properties of these fibers were: M, 5.2 g/den; T, 0.13 g/den; and E, 35%.

Example 44.

A commercially available (E. I. du Pont de Nemours and Company) PTFE emulsion (43.7% spherical particles), 25 mL, and 25 mL of an anisotropic PTFE emulsion (4.6% rod-like particles), as prepared in accordance with the procedures disclosed herein, were mixed at 50°. The mixture contained 9.5 wt. % rod-like particles, based on the combined weights of polymers. Coherent fibers were spun from the mixture in 3% HCl (air gap spinning). The fibers could be drawn in a continuous mode at a speed of 25 meters/minute. Fiber properties are listed below. Fiber 1 was sintered at 370° and Fiber 2 was sintered at 370° while maintaining at constant length.

| Fiber | Tenacity (g/den) | Elongation (%) | Modulus (g/den) | Denier |
|---|---|---|---|---|
| 1 | 0.13 | 492 | 0.70 | 1150 |
| 2 | 0.43 | 28 | 1.50 | 292 |

Example 45

Example 44 was repeated using 20 mL of the commercial PTFE emulsion and 10 mL of the anisotropic emulsion. The mixture contained 5 wt. % rod-like particles, based on the combined weights of polymers. Fiber properties are listed below. Fiber 3 was sintered at 370° and Fiber 4 was sintered at 370° while maintaining at constant length.

| Fiber | Tenacity (g/den) | Elongation (%) | Modulus (g/den) | Denier |
|---|---|---|---|---|
| 3 | 0.08 | 592 | -- | 1890 |
| 4 | 0.78 | 16 | 4.90 | 395 |

In preparing the mixed dispersions in Examples 44 and 45, gel formation or coagulation was initially observed. It was discovered that the problem could be avoided by carrying out the mixing at 50°, or by adding a commonly used surfactant, for example, $C_7F_{15}CO_2NH_4$ or $C_{12}H_{25}CO_2Na$.

BEST MODE FOR CARRYING OUT THE INVENTION

The best mode presently contemplated for carrying out the invention is represented by the detailed description of the invention herein.

**Claims**

1. Process for the production of an anisotropic, liquid crystalline aqueous dispersion by the free radical polymerization of tetrafluoroethylene or a mixture of greater than 50 mol % of tetrafluoroethylene and less than 50 mol % of a comonomer copolymerizable therewith, in an aqueous medium, in a substantially oxygen-free system, the process comprising polymerizing tetrafluoroethylene or a mixture of tetrafluoroethylene and up to 1 mole % of a comonomer copolymerizable therewith, for 1-180 minutes, at 40-150°C, at 20-2000 psig (138-13,800 kPa) of tetrafluoroethylene or tetrafluoroethylene/comonomer, in the presence of 0.0001-0.1 wt./vol.% of free radical initiator and a surfactant of the formula RA wherein:

R is

1) $Z\leftarrow CF_2 \rightarrow_x \leftarrow CH_2CH_2 \rightarrow_y$ wherein

y is 0 or 1;

x is 7 to 13; and

Z is H, F, Cl or Br; or

2) W-$CF_2CF(W)O$ $\leftarrow$ $CF_2CF(CF_3)O$ $\rightarrow_z$ $CF_2CF_2$-
wherein
z is 1 or 2; and
W is Cl or F; or
3) Z$\leftarrow$ $CF_2$ $\rightarrow_x$ $\leftarrow$ $CH_2$ $\rightarrow_y$ wherein
y is 0, 1 or 2;
x is 8 to 13; and
Z is H, F, Cl or Br; and
A is
-$SO_3M$, -COOM or -$SO_3NR_2$ wherein
M is $Li^+$, $Na^+$, $K^+$ or $NH_4^+$;
R is -$C_xH_{2x+1}$; and
x is 1 to 5.

the surfactant concentration being in the range extending from the critical micelle concentration (cmc) to the total solubility of the surfactant in the polymerization medium.

2. Process of Claim 1 wherein the polymerization time is about 1-120 minutes, the temperature is 60-100°C, the pressure of tetrafluoroethylene is 60-600 psig (414-4,140 kPa), the concentration of initiator is 0.005-0.020 wt./vol.%, and the concentration of surfactant is in the range extending from cmc to about 5 wt./vol.%.

3. Process of Claim 2 wherein the tetrafluoroethylene/comonomer mixture is comprised of greater than 80 mol %, preferably at least 98 mol %, of tetrafluoroethylene and less than 20 mol %, preferably no more than 2 mol %, of comonomer.

4. Process of Claim 3 wherein the comonomer is vinylidene fluoride, hexafluoropropylene, perfluoropropyl vinyl ether or perfluorobutyl ethylene.

5. Anisotropic, liquid crystalline aqueous dispersion of polytetrafluoroethylene or tetrafluoroethylene copolymer prepared by the process of Claim 1.

6. Anisotropic, liquid crystalline aqueous dispersion of a polymer selected from polytetrafluoroethylene and a copolymer comprised of greater than 50 mol %, preferably greater than 80 mol % and especially at least 98 mol %, of tetrafluoroethylene repeat units and less than 50 mol %, preferably less than 20 mol % and especially no more than 2 mol %, of repeat units of a comonomer which is copolymerizable with tetrafluoroethylene.

7. Aqueous dispersion consisting of at least two phases, the uppermost phase being an isotropic aqueous dispersion comprised of rod-like particles of a polymer selected from polytetrafluoroethylene and a copolymer comprised of greater than 50 mol %, preferably greater than 80 mol % and especially at least 98 mol %, of tetrafluoroethylene repeat units and less than 50 mol %, preferably less than 20 mol % and especially no more than 2 mol %, of repeat units of a comonomer which is copolymerizable with tetrafluoroethylene, each of the remaining phases being an anisotropic, liquid crystalline aqueous dispersion of a polymer selected from polytetrafluoroethylene and a copolymer comprised of greater than 50 mol %, preferably greater than 80 mol % and especially at least 98 mol %, of tetrafluoroethylene repeat units and less than 50 mol %, preferably less than 20 mol % and especially no more than 2 mol %, of repeat units of a comonomer which is copolymerizable with tetrafluoroethylene.

8. Aqueous dispersion comprised of a mixture of an anisotropic, liquid crystalline aqueous dispersion of a polymer selected from polytetrafluoroethylene and a copolymer comprised of greater than 50 mol %, preferably greater than 80 mol % and especially at least 98 mol %, of tetrafluoroethylene repeat units and less than 50 mol %, preferably less than 20 mol % and especially no more than 2 mol %, of repeat units of a comonomer which is copolymerizable with tetrafluoroethylene and up to 95% by weight, based on the combined weights of polymers, of an aqueous polytetrafluoroethylene dispersion substantially comprised of spherical particles of polytetrafluoroethylene.

9. Process for the production of a fiber of a polymer selected from polytetrafluoroethylene and a copolymer comprised of greater than 50 mol %, preferably greater than 80 mol % and especially at least 98 mol %, of tetrafluoroethylene repeat units and less than 50 mol %, preferably less than 20 mol % and especially no more than 2 mol %, of repeat units of a comonomer which is copolymerizable with tetrafluoroethylene, the process comprising extruding an anisotropic, liquid crystalline aqueous dispersion of a polymer selected from polytetrafluoroethylene and a copolymer comprised of greater than 50 mol %, preferably greater than 80 mol % and especially at least 98 mol %, of tetrafluoroethylene repeat units and less than 50 mol %, preferably less than 20 mol % and especially no more than 2 mol %, of repeat units of a comonomer which is copolymerizable with tetrafluoroethylene into a dilute aqueous solution of calcium chloride or magnesium chloride, 1-98% $H_2SO_4$/water, 1-30% HCl/water, ethanol for a dispersion prepared in

the presence of a surfactant containing a terminal $-SO_3^-$ group, or aqueous solutions of $C_{16}H_{33}N(CH_3)_3^+Br^-$ for a dispersion prepared in the presence of a surfactant containing a terminal $-COO^-$ group, and collecting the fiber thus produced.

10. Process of Claim 9 wherein the concentration of calcium chloride or magnesium chloride is 2-10 wt.%, preferably about 5 wt.%.

11. White fiber which is produced by a non-sintering process and is comprised of polytetrafluoroethylene or a copolymer comprised of greater than 50 mol % of tetrafluoroethylene repeat units and less than 50 mol % of repeat units of a comonomer which is copolymerizable with tetrafluoroethylene.

12. Process of Claim 9 wherein the anisotropic, liquid crystalline aqueous dispersion is admixed with up to 95% by weight, preferably 91.5 to 95% by weight, based on the combined weights of polymers, of aqueous polytetrafluoroethylene dispersion substantially comprised of spherical particles of polytetrafluoroethylene.

13. Process of Claim 12 wherein the dispersion substantially comprised of spherical particles of polytetrafluoroethylene contains a surfactant.

Neu eingereicht / Newly filed
Nouvellement déposé

FIG.1

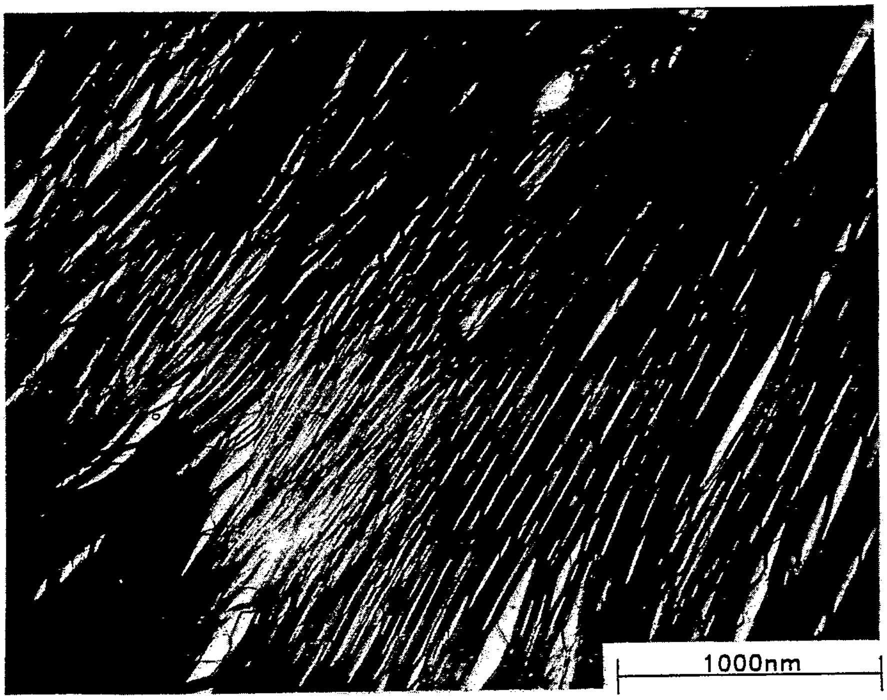


FIG.2

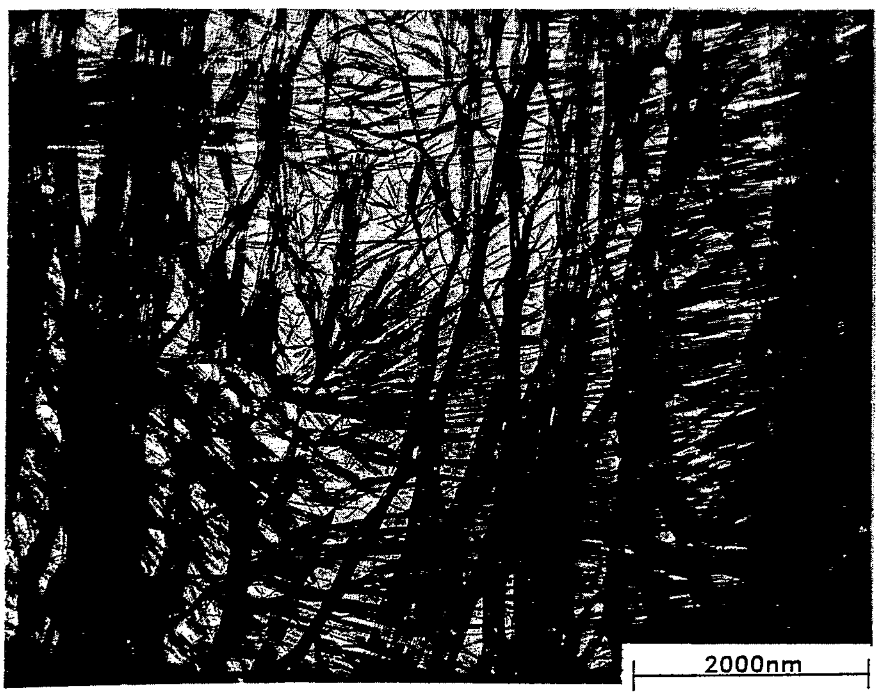

Neu eingereicht / Newly filed
Nouvellement déposé

FIG.3

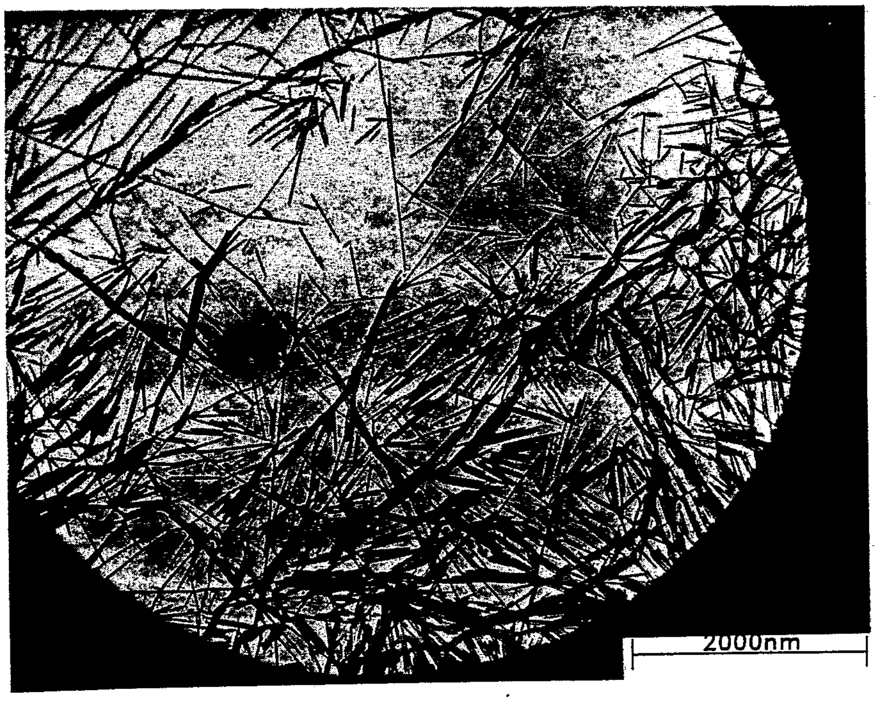


FIG.4

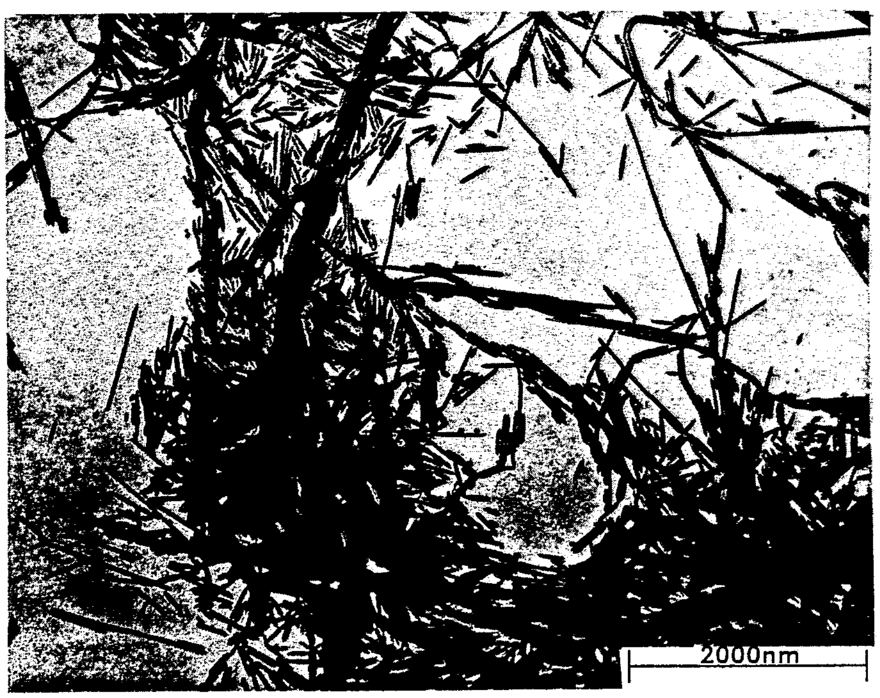

Neu eingereicht / Newly filed
Nouvellement déposé

FIG.5

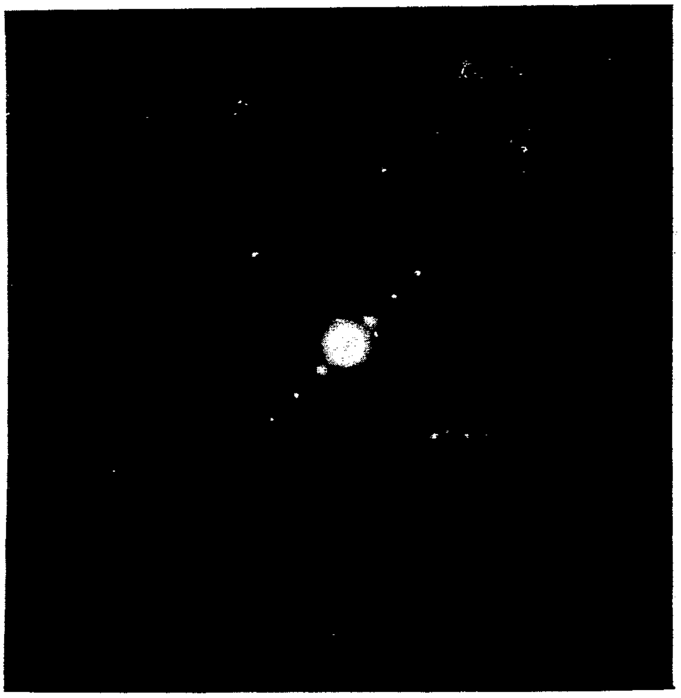

FIG.6

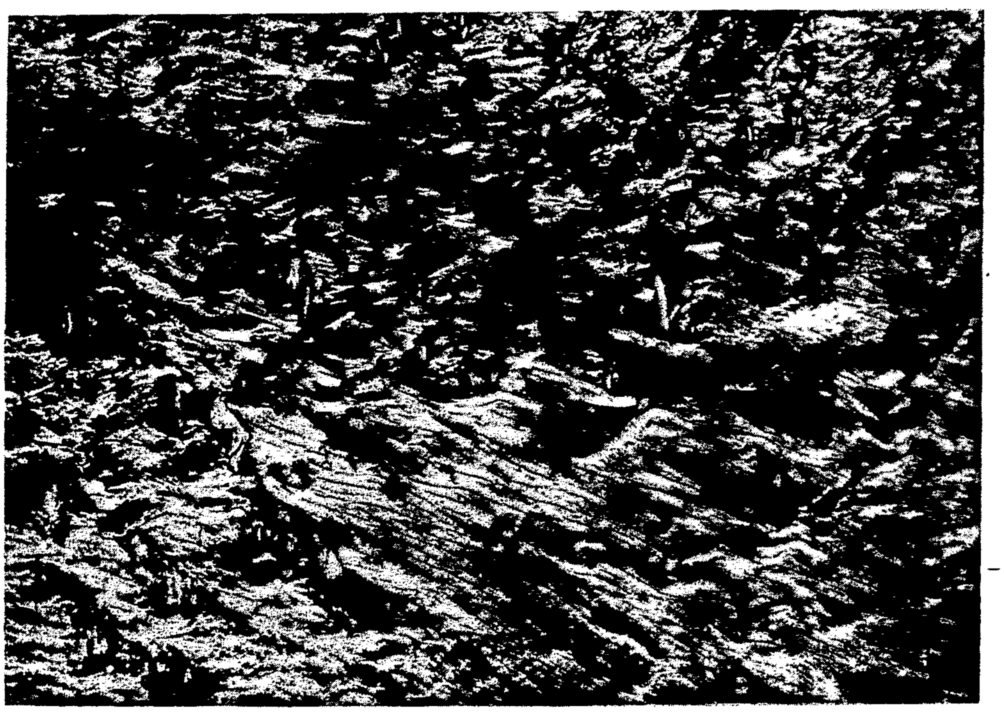

Neu eingereicht / Newly filed
Nouvellement déposé

FIG.7

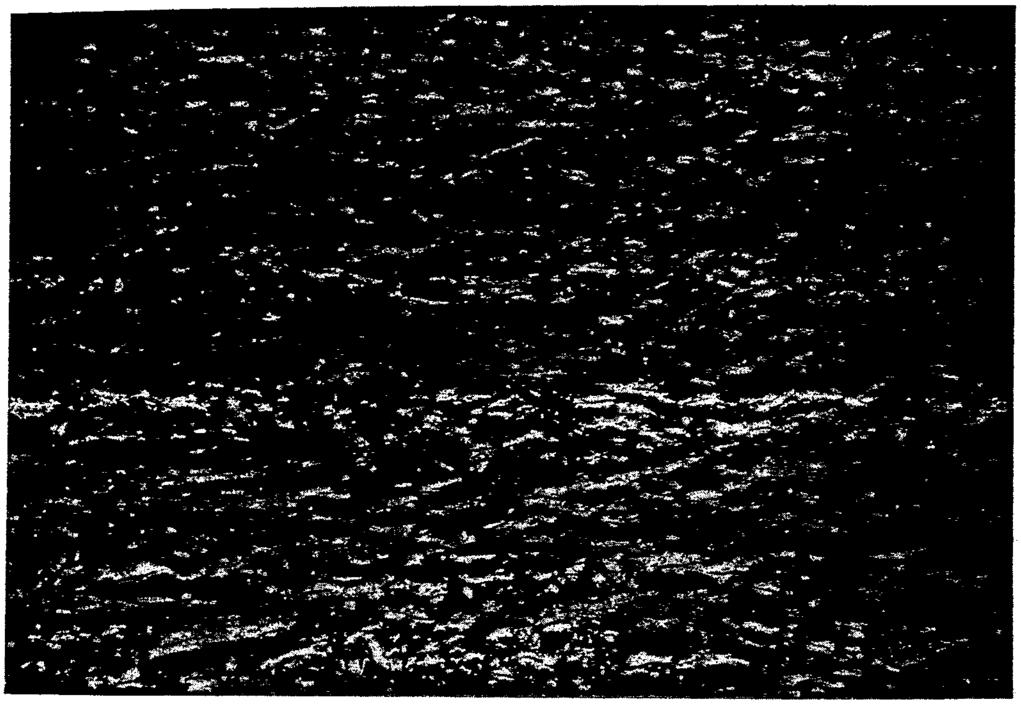

FIG.8

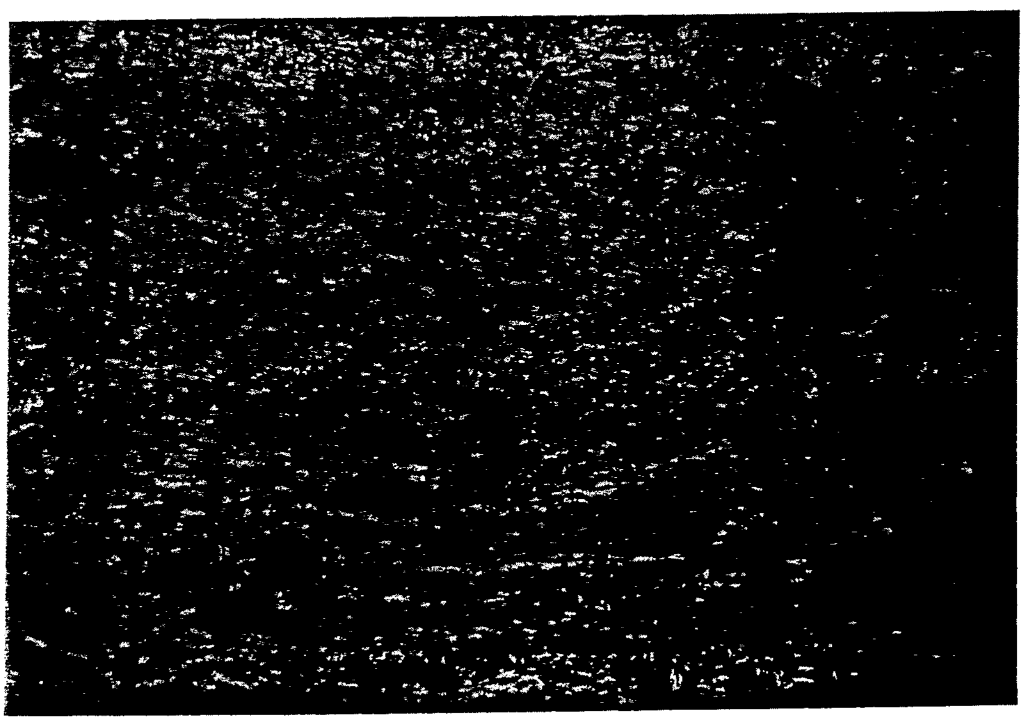

Neu eingereicht / Newly filed
Nouvellement déposé

FIG.9

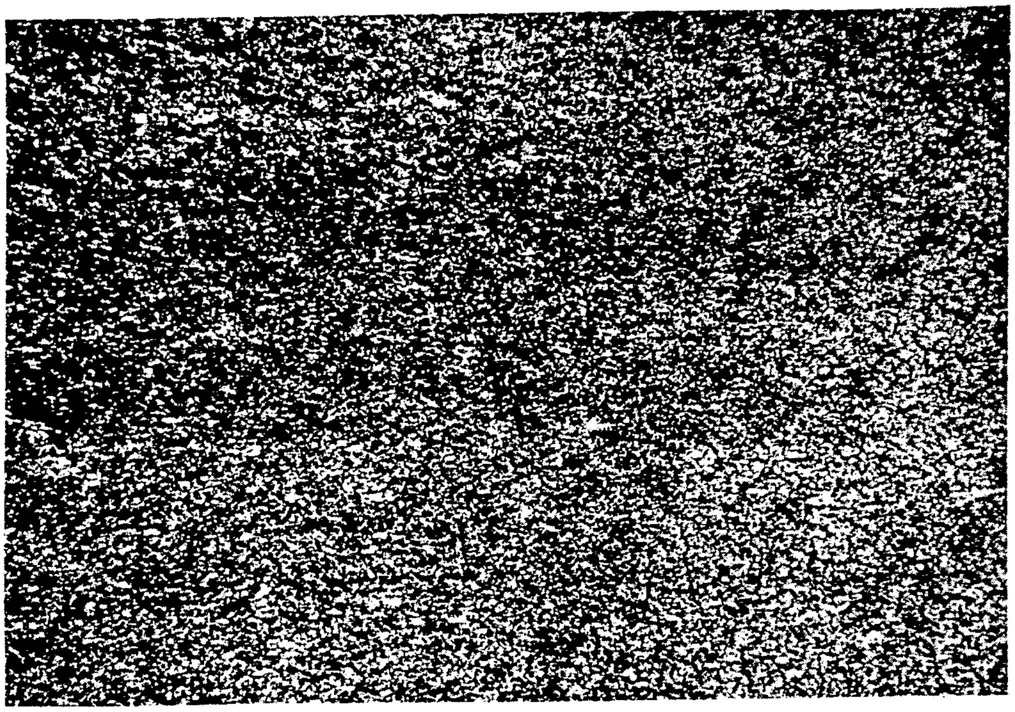

FIG.10

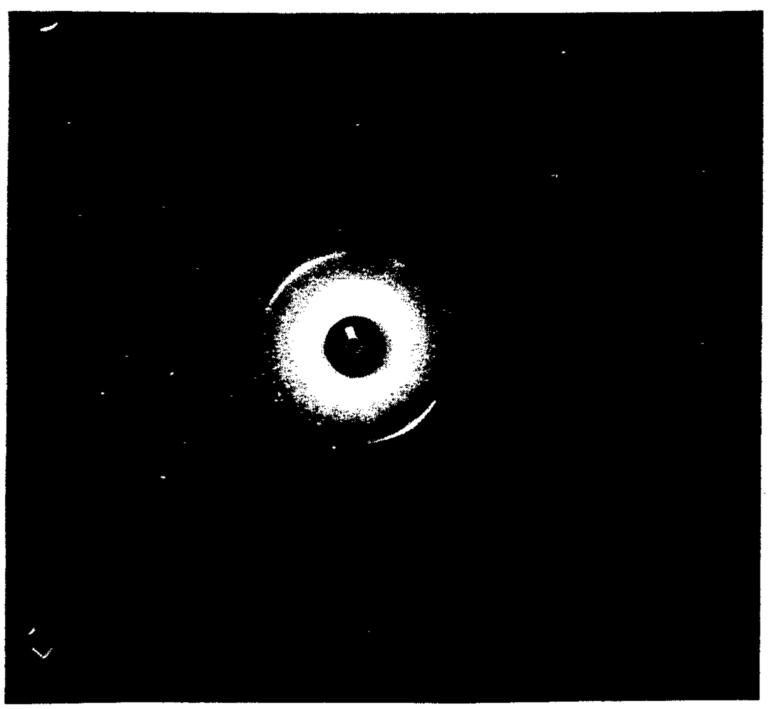

Neu eingereicht / Newly filed
Nouvellement déposé

FIG.11

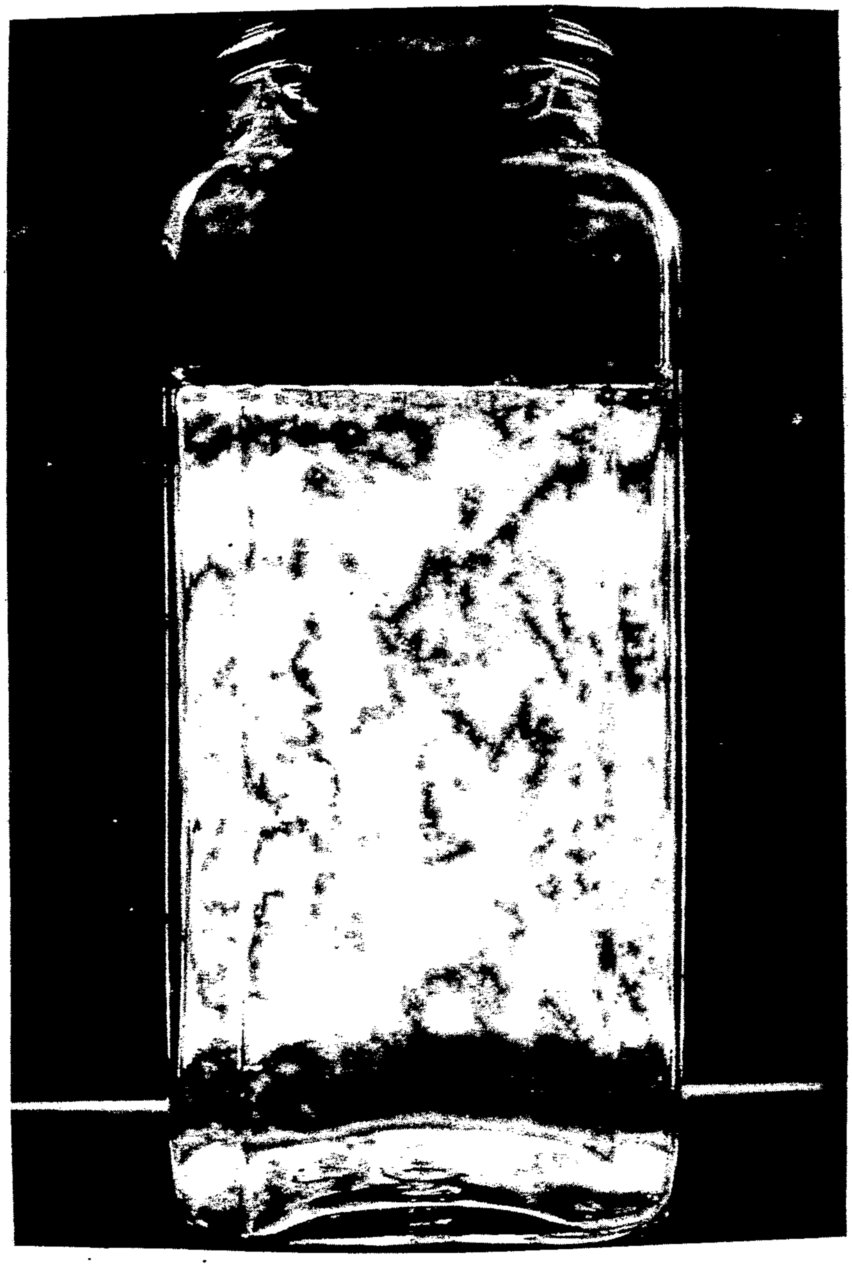

Neu eingereicht / Newly filed
Nouvellement déposé

FIG.12